**Europäisches Patentamt**

**European Patent Office**

**Office européen des brevets**

(19)

(11) Veröffentlichungsnummer: **0 163 168**
**A2**

(12) # EUROPÄISCHE PATENTANMELDUNG

(21) Anmeldenummer: **85105518.6**

(22) Anmeldetag: **06.05.85**

(51) Int. Cl.⁴: **H 01 S 3/03**

(30) Priorität: **01.06.84 DE 3420559**

(43) Veröffentlichungstag der Anmeldung:
**04.12.85 Patentblatt 85/49**

(84) Benannte Vertragsstaaten:
**CH DE FR GB IT LI NL SE**

(71) Anmelder: **Siemens Aktiengesellschaft
Berlin und München Wittelsbacherplatz 2
D-8000 München 2(DE)**

(72) Erfinder: **Golser, Hans, Ing.-grad.
Therese-Giehse-Allee 38
D-8000 München 83(DE)**

(54) **Zylindrisches Entladungsrohr für einen Gaslaser und seine Verwendung.**

(57) Das Entladungsrohr ist folgendermaßen gestaltet: Ein relativ dünner, zylindrischer Keramikmantel (1) ist in seinem Inneren durch eine Reihe von Kupferscheiben (2) unterteilt. Jede Scheibe (2) enthält einen koaxial zum Mantel angeordneten, am Mantelrohr (1) angelöteten Außenring (7) sowie eine zentrale Öffnung und ist im Bereich der Öffnung dicker als im Ringbereich. Die Dicke ist eine Funktion vom Abstand zur Rohrlängsachse, derart, daß die Scheibenfläche, die die Wärme auf ihren Weg von der Öffnung zum Mantelrohr durchsetzt, mit wachsendem Abstand von der Rohrlängsachse nicht kleiner wird. In jede zentrale Scheibenöffnung ist ein koaxial zum Mantelrohr verlaufendes Keramikröhrchen (3) eingelötet. Bevorzugtes Ausführungsbeispiel: Das Mantelrohr (1) ist wasserumspült; die Kupferscheiben (2) bestehen jeweils aus einem Außenund einem Innenteil (5 bzw. 6), die beide miteinander verlötet sind jeweils eine konstante Wandstärke haben; das Innenteil (6) läuft in einen zum Mantel koaxialen Ring (Innenring 7) aus, der das Keramikröhrchen (3) umgibt und seinerseits von einem Druckring (4) aus Molybdän umschlossen wird.

Hauptanwendungsgebiet: Art-Laser mit einer Ausgangsleistung im Wattbereich.

## Zylindrisches Entladungsrohr für einen Gaslaser.

Die Erfindung bezieht sich auf ein Entladungsrohr gemäß dem Oberbegriff des Anspruchs 1. Eine solche Röhre wird beispielsweise in der US-PS 43 78 600 beschrieben, und zwar im Zusammenhang mit $Ar^+$- und $Kr^+$-Lasern hoher Leistung.

Das Entladungsrohr eines Edelgas-Ionenlasers hat eine Reihe von spezifischen Anforderungen zu erfüllen: Es muß zunächst extrem hohen Temperaturen - das Plasma heizt sich im Betrieb auf mehrere 1000°C auf - vertragen können. Die Verlustwärme sollte dabei möglichst widerstandsarm abgeführt werden, denn mit steigender Betriebstemperatur nehmen sowohl der Wirkungsgrad als auch die Lebensdauer des Lasers deutlich ab. Trägt die Röhre auch noch die Laserspiegel, so darf die Wärmeabfuhr nur radial isotrop erfolgen, da schon kleinste Verformungen im Träger den Resonator dejustieren können. Davon abgesehen darf das Röhrenmaterial, das vor allem in unmittelbarer Nähe der Entladung hohen Ionenströmen ausgesetzt ist, nicht sputtern. Oberflächenabstäubungen erhöhen nämlich die Kurzschlußgefahr, vermindern den Gasdruck und verändern den Querschnitt des Entladungskanals.

Bei Lasern im unteren Leistungsbereich kommt man mit einer luftgekühlten Berylliumoxidkapillare zu befriedigenden Ergebnissen. Werden höhere Strahlintensitäten - etwa $10^3$ mW bei $Ar^+$-Lasern - verlangt, so muß man auf eine Segmentbauweise übergehen, bei der ein relativ dünnes Keramikrohr durch eine Reihe von wärmeleitenden Querwänden unterteilt wird. Der Keramikmantel dient dabei lediglich als Vakuumhülle und ggf. zur elektrischen Isolation; das eigentliche Plasma ist auf einen zentralen,

Les 1 Lk/ . .1984 durch Scheibenbohrungen definierten Kanal begrenzt.

Dieses Konzept wurde in den letzten Jahren auf verschiedene Weise realisiert. In der eingangs zitierten Patentschrift wird eine Variante folgender Konstruktion dargestellt: Ein wasserumspültes Aluminiumrohr mit einer Wandstärke von ca. 3mm und einem Außendurchmesser von etwa 38mm enthält eine Reihe von becherförmigen, knapp 1mm starken Kupferziehteilen. Jeder dieser Becher, die an ihren Seitenwänden mit dem Mantelrohr verlötet sind, hat in seinem Boden eine zentrale Öffnung und ist anodenseitig mit einer Wolfram-Ringscheibe und kathodenseitig mit einem koaxial zum Mantelrohr verlaufenden Kupferzylinder verlötet. Das Wolframteil dient als Sputterschutz, und der Kupferzylinder trägt dazu bei, daß der Außenraum kühl und frei von metallischen Niederschlägen bleibt.

Eine solche Röhrenkonstruktion hat sich für Leistungen bis etwa 5W bei Ar$^+$-Lasern und bis zu ca. 1W bei Kr$^+$-Lasern bewährt. Versucht man allerdings, die Leistung noch weiter zu steigern, so verschlechtern sich wesentliche Kenndaten der Röhre, und zwar vor allem deshalb, weil dann die Sputterrate des Wolframs störende Ausmaße erreicht. Das Sputterverhalten, das u.a. auch von der Wolframtemperatur abhängt, ließe sich vielleicht noch dadurch verbessern, daß man den Wärmeübergang zum Kupfer günstiger gestaltet und beispielsweise das Wolfram als Schicht statt als Scheibe aufbringt (vgl. hierzu auch in der US-PS 43 78 600 Spalte 8, Zeilen 19 bis 22). Eine solche Beschichtung verlangt allerdings Vakuumprozesse und würde somit die gesamte Laserherstellung verteuern.

Der Erfindung liegt die Aufgabe zugrunde, eine Röhre der eingangs genannten Art zu schaffen, die auch bei höchsten Leistungen keine störenden Sputtereffekte zeigt und im übrigen ohne sonderlichen Kostenaufwand gefertigt werden kann. Diese Aufgabe wird erfindungsgemäß durch einen Röhrentyp mit den Merkmalen des Patentanspruchs 1 gelöst.

Das vorgeschlagene Entladungsrohr enthält statt Wolframscheiben Keramikröhrchen. Die üblichen Keramiken, beispielsweise Berylliumoxid, Aluminiumoxid oder Aluminiumnitrid, sind durchwegs sputterfester als Wolfram. BeO
hat darüber hinaus auch eine höhere Wärmeleitfähigkeit
als W. Man kann aber auch mit thermisch weniger günstigen
Keramiken, insbesondere mit dem besonders preisgünstigen,
ungiftigen $Al_2O_3$, arbeiten, weil die Kupferscheibe in
ihrem Zentrum relativ dick ist und somit die vom Röhrchen
aufgenommene Wärme auf großer Fläche weitergegeben werden
kann. Im Außenbereich hat die Scheibe eine relativ geringe
Wandstärke, damit die Lötverbindung zwischen ihrem Außenring und dem keramischen Mantelrohr, die unter erheblichen Thermospannungen steht,   auch ohne besondere Sicherungsmaßnahmen auf Dauer erhalten bleibt. Die Dickenverhältnisse in
der Scheibe sind dabei erfindungsgemäß so gewählt, daß
die vom Keramikröhrchen abgegebene   Wärme auf ihrem Weg
zum Keramikmantel nicht gestaut wird: Mit zunehmendem Abstand von der Rohrlängsachse wird, wie man anhand einer
einfachen Rechnung sofort verifizieren kann, die durchsetzte Scheibenfläche trotz abnehmender Scheibendicke
nicht kleiner. Man erhält somit eine thermisch und mechanisch hochbelastbare Röhre, die zudem auch noch relativ
einfach aufgebaut ist. Insbesondere brauchen die entladungsfernen Flächen und Volumina nicht mehr durch besondere Teile abgeschirmt zu werden.

In der US-PS 35 01 714 wird an sich bereits diskutiert,
eine massive (Cu-)Scheibe in ihrem Zentrum mit einem
(BeO-)Röhrchen zu versehen. Bevorzugt wird allerdings
die Materialkombination Molybdän/Tantal; im übrigen ist
das Röhrchen nur eingeschoben und wird nicht weiter fixiert. In der zitierten Patentschrift findet sich auch
schon der Hinweis, der Scheibe einen dünnwandigen Außenrand zu geben. Dieser Rand dient jedoch ausschließlich
dazu, die Scheibe in einem Klemmsitz zu haltern, so daß
von daher keinerlei Veranlassung besteht, auch bei eingelöteten Scheiben die Wandstärke von innen nach außen abnehmen zu lassen.

Bei einem erfindungsgemäßen Entladungsrohr kann es sich empfehlen, die Lötverbindung zwischen dem Keramikröhrchen und der Kupferscheibe noch durch eine Druckmanschette zu sichern. Am einfachsten geschieht dies dadurch, daß man der Scheibe im Bereich ihrer zentralen Öffnung einen Ring anformt, der das Röhrchen umgibt und seinerseits von einem weiteren Ring aus einem thermisch an die Röhrchenkeramik angepaßten Material umschlossen wird.

Aus fertigungstechnischen Gründen bietet es sich an, die Kupferscheibe aus einem inneren und einem äußeren Teil aufzubauen , die beide über eine umlaufende Lotnaht miteinander verbunden sind und jeweils eine konstante Dicke haben. Denkbar wäre aber auch eine einteilige Ausführung mit einer Wandstärke, die sich sprunghaft oder stetig ändert.

Weitere vorteilhafte Ausgestaltungen und Weiterbildungen der Erfindung sind Gegenstand zusätzlicher Ansprüche.

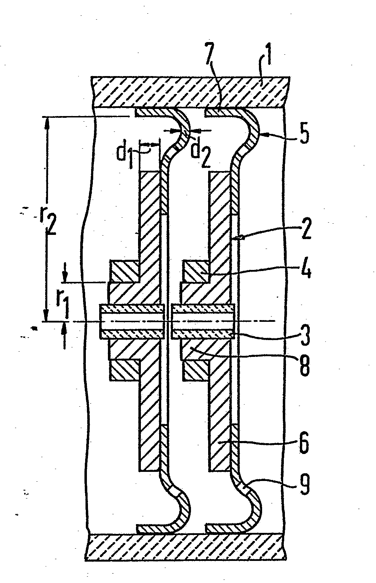

Die Erfindung soll nun anhand eines bevorzugten Ausführungsbeispiels unter Bezugnahme auf die beigefügte Figur näher erläutert werden.

Die Figur zeigt ein Entladungsrohr in einem teilweise weggebrochenen Längsschnitt. Das Rohr ist für einen 7W-$Ar^+$-Laser mit Wasserkühlung gedacht. Das Rohr enthält im einzelnen eine hohlzylindrische Hülle 1, Querscheiben 2, Röhrchen 3 und Druckringe 4.

Die Querscheiben, die sich senkrecht zur Längsachse des Hüllenrohrs 1    erstrecken und das Rohrinnere in identische Abschnitte unterteilen, bestehen jeweils aus einem äußeren Teil 5 und einem inneren, mit dem äußeren verlöteten Teil 6. Teil 5 läuft in einen koaxial zur Hülle 1 angeordneten, an seiner Außenseite mit der Innenseite der Hülle verlöteten Ring 7 aus. Dieser Ring ist durch mehrere (nicht dargestellte) Einschnitte unterteilt, um die Verbindung zur Hülle möglichst spannungsfrei zu halten. Außerdem enthält das Teil mehrere Löcher 9, die für einen Druckausgleich im gasgefüllten Entladungsrohr sorgen. Dem inneren Scheibenteil ist ein Ring 8 angeformt, der jeweils ein Röhrchen 3 umfaßt und mit ihm verlötet ist. Dieser Ring wird seinerseits von je einem der Druckringe 4 umschlossen.

Die einzelnen Teile sind folgendermaßen beschaffen und dimensioniert:

Hülle und Röhrchen bestehen aus Aluminiumoxid, die Scheiben aus Kupfer und die Druckringe aus $Ni_{28}Co_{18}Fe_{54}$. Diese Legierung L ist thermisch an $Al_2O_3$ angepaßt, das heißt, die beiden thermischen Ausdehnungskoeffizienten $\alpha_L$ und $\alpha_{Al_2O_3}$ erfüllen im interessierenden Temperaturbereich die Relation $|(\alpha_L - \alpha_{Al_2O_3})/\alpha_L| < 0,1$. Die Hülle hat einen Außendurchmesser von 57mm und eine Wandstärke von 3,5mm. Das äußere Scheibenteil ist 1mm stark und hat eine Öffnung mit einem Durchmesser von 25mm. Das innere Scheibenteil ist 2mm dick, hat einen Außendurchmesser von 35mm und eine Öffnung mit einem Durchmesser von 4mm. Das Keramikröhrchen ist etwa 7,5mm lang, hat eine Bohrungsweite von 2mm und eine Wandstärke von ebenfalls ungefähr 1mm. Der Druckring hat einen etwa quadratischen Querschnitt mit 3mm Kantenlänge. Benachbarte Röhrchen liegen etwa 0,5mm auseinander.

Der Laser ist ansonsten konventionell aufgebaut. Für weitere Herstellungs- und Betriebseinzelheiten wird auf die bereits zitierte US-PS 43 78 600 verwiesen.

11 Patentansprüche
1 Figur

Patentansprüche

1. Zylindrisches Entladungsrohr für einen Gaslaser, mit folgenden Merkmalen:

1) es enthält ein keramisches Mantelrohr (1);

2) das Innere des Mantelrohrs (1) ist durch mehrere senkrecht zur Längsachse erstreckte Wände (Querwände) in einzelne Abschnitte unterteilt;

3) jede Querwand besteht aus einer Kupferscheibe (2), die außen in einen ersten Ring (Außenring 7) ausläuft und in ihrem Zentrum mit einer Öffnung versehen ist;

4) der Außenring (7) ist mit dem Mantelrohr (1) in koaxialer Lage verlötet;

5) im Bereich ihrer Öffnung ist die Kupferscheibe (2) mit einem Körper verlötet, der aus einem sputterresistenten Material besteht und eine zentrale Bohrung aufweist;

dadurch gekennzeichnet, daß

6) gilt: $r_1 d_1 \leq rd \leq r_2 d_2$ und $d_1 > d_2$

(r = Abstand von der Rohrlängsachse, wobei $r_1 \leq r \leq r_2$; $r_1$ = Abstand im Bereich der zentralen Scheibenöffnung und $r_2$ = Abstand im Bereich des Außenrings; d = Dicke der Kupferscheibe; $d_{1,2}$ = Scheibendicke im Abstand $r_{1,2}$) und

7) jeder Körper ein Röhrchen (3) ist, das aus einer Keramik besteht und koaxial zum Mantelrohr (1) in der zentralen Scheibenöffnung eingelötet ist.

2. Entladungsrohr nach Anspruch 1, dadurch gekennzeichnet, daß gilt: $2r_1 d_1 \leq r_2 d_2$.

3. Entladungsrohr nach Anspruch 1 oder 2, dadurch gekennzeichnet, daß der Kupferscheibe (2) im Bereich ihrer zentralen Öffnung ein zweiter Ring (Innenring 8) angeformt ist, der das Keramikröhrchen (3) umschließt.

4. Entladungsrohr nach Anspruch 3, d a d u r c h g e -
k e n n z e i c h n e t , daß der Innenring (8) von
einem weiteren, vorzugsweise aus Molybdän oder einer FeCoNi-
Legierung bestehenden Ring (Druckring 4) umschlossen wird,
der aus einem thermisch an die Röhrchenkeramik angepaßten
Material besteht.

5. Entladungsrohr nach einem der Ansprüche 1 bis 4,
d a d u r c h g e k e n n z e i c h n e t , daß die
Scheiben einteilig ausgeführt sind, wobei sich die Wandstärke mit wachsendem Abstand r bei einem vorgegebenen
r-Wert sprunghaft oder zwischen zwei vorgegebenen, unterschiedlichen r-Werten stetig verjüngt.

6. Entladungsrohr nach einem der Ansprüche 1 bis 5,
d a d u r c h g e k e n n z e i c h n e t , daß die
Kupferscheiben (2) jeweils aus einem äußeren und einem
inneren Teil (5 bzw. 6) gebildet werden, die miteinander
verlötet sind und jeweils eine konstante Wandstärke haben.

7. Entladungsrohr nach einem der Ansprüche 1 bis 6,
d a d u r c h g e k e n n z e i c h n e t , daß das
Mantelrohr (1) aus Aluminiumoxid besteht.

8. Entladungsrohr nach einem der Ansprüche 1 bis 7,
d a d u r c h g e k e n n z e i c h n e t , daß die
Keramikröhrchen (3) aus Aluminiumoxid, Berylliumoxid oder
Aluminiumnitrid bestehen.

9. Entladungsrohr nach einem der Ansprüche 1 bis 8,
d a d u r c h g e k e n n z e i c h n e t , daß das
Mantelrohr (1) einen Außendurchmesser zwischen 4cm und
7cm hat und zwischen 0,3cm und 0,4cm dick ist, daß $d_1$
einen Wert zwischen 0,15cm und 0,28cm hat und ggf. wenigstens angenähert der Dicke des Innenrings (8) entspricht,
daß $d_2$ einen Wert zwischen 0,07cm und 0,13cm hat und wenigstens angenähert der Dicke des Außenrings (7) entspricht und daß die Keramikröhrchen (3) zwischen 0,5cm und 1,0cm lang sind, Außendurchmesser zwischen 0,3cm und 0,5cm und Bohrungen mit einer Weite zwischen 0,15cm und 0,3cm aufweisen.

10. Entladungsrohr gemäß einem der Ansprüche 1 bis 9, g e k e n n z e i c h n e t   d u r c h   seine Verwendung in einem Ionenlaser, insbesondere Argon- oder Krypton-Ionenlaser.

11. Entladungsrohr gemäß Anspruch 10, g e k e n n z e i c h n e t   d u r c h   seine Verwendung in einem Argon-Ionenlaser mit einer Entladungsstromstärke von mindestens $1000A/cm^2$, insbesondere von mindestens $1500A/cm^2$.